# FASCICULE DE BREVET EUROPEEN

(11) **EP 2 932 549 B1**
(45) Date de publication et mention de la délivrance du brevet: **14.03.2018**
(21) Numéro de dépôt: 13796099.3
(22) Date de dépôt: 29.11.2013
(51) Int. Cl.: H01M 8/1018, H01M 8/04223, H01M 8/04537, H01M 8/04664

(54) **PROCÉDURE DE DÉTECTION DE L'ÉTAT DE PERMÉABILITÉ DE LA MEMBRANE POLYMÈRE ÉCHANGEUSE D'IONS D'UNE PILE À COMBUSTIBLE**
VERFAHREN ZUR ERFASSUNG DES ZUSTANDES DER PERMEABILITÄT DER IONENAUSTAUSCHPOLYMERMEMBRAN EINER BRENNSTOFFZELLE
PROCEDURE FOR DETECTING THE STATE OF PERMEABILITY OF THE ION EXCHANGE POLYMER MEMBRANE OF A FUEL CELL

(30) Priorité: 14.12.2012 FR 1262069
(43) Date de publication de la demande: 21.10.2015
(73) Titulaire: Compagnie Générale des Etablissements Michelin, 63000 Clermont-Ferrand (FR)
(72) Inventeur: PAGANELLI, Gino, F-63040 Clermont-Ferrand Cedex 9 (FR); FRAGNIERE, Lionel, F-63040 Clermont-Ferrand Cedex 9 (FR)
(74) Mandataire: Roussy, Delphine
(86) Numéro de dépôt international: PCT/EP2013/075046
(87) Numéro de publication internationale: WO 2014/090595

(56) Documents cités:
- WO-A1-2011/051338
- WO-A1-2011/051341

## Description

### DOMAINE DE L'INVENTION

La présente invention se rapporte aux piles à combustibles, en particulier mais non exclusivement aux piles à combustible du type à électrolyte sous la forme d'une membrane polymère (c'est à dire de type PEFC pour Polymer Electrolyte Fuel Cell).

### ETAT DE LA TECHNIQUE

On sait que les piles à combustibles permettent la production directe d'énergie électrique par une réaction électrochimique d'oxydoréduction à partir d'hydrogène (le carburant) et d'oxygène (le comburant), sans passer par une conversion en énergie mécanique. Cette technologie semble prometteuse notamment pour des applications automobiles. Une pile à combustible comporte en général l'association en série d'éléments unitaires qui, chacun, sont constitués essentiellement d'une anode et d'une cathode séparées par une membrane polymère permettant le passage d'ions de l'anode à la cathode.

Il est très utile de disposer en permanence d'une évaluation précise de la perméabilité de la membrane échangeuse d'ions de chaque cellule d'une pile à combustible de façon à suivre son état de vieillissement et ainsi pouvoir en cesser l'utilisation si la sécurité était compromise. Si le principe de mesure de la perméabilité d'une membrane échangeuse d'ions par différence de pression est classique, on ne connaît en pratique que des méthodes d'investigations qui imposent d'utiliser un équipement approprié et une procédure manuelle. Par exemple, on utilise une bouteille d'azote externe que l'on branche à l'un des circuits anodique ou cathodique et l'on observe la fuite de gaz vers l'autre circuit.

La demande de brevet US 2004/124843 propose une méthode pour évaluer la perméabilité individuelle de chaque membrane échangeuse d'ions d'une pile à combustible. Pour cela, l'anode est alimentée en hydrogène et la cathode est alimentée en azote ou en un autre gaz neutre. Selon l'équation de Nernst, la différence de nature de gaz de part et d'autre de la membrane génère une différence de potentiel dépendant, entre autres, de la nature et de la concentration ou pression partielle de ces gaz. Il apparaît que si une membrane est particulièrement perméable, l'hydrogène va diffuser côté cathode et inversement, modifiant ainsi la nature du mélange gazeux de part et d'autre de la membrane et par conséquent la différence de potentielle mesurée sur cette cellule. Cette méthode procède à une mesure de tension, à une mesure de la pression régnant dans le circuit anodique et de la pression régnant dans le circuit cathodique, et à une mesure de température pour résoudre l'équation de Nernst, afin de déceler si une ou plusieurs membranes montées au sein d'une pile à combustible présentent un défaut de perméabilité.

Cependant, cette méthode présente les difficultés de mise en oeuvre suivantes :
- la différence de potentiel théorique avec de l'hydrogène pur à l'anode et de l'azote pur à la cathode est au maximum de quelques dizaines de mV, ce qui implique un appareillage de mesure de tension très précis ;
- l'évaluation de la perméabilité implique des mesures de débit, ce qui en pratique est difficilement réalisable avec une grande précision pour les mélanges gazeux ;
- la moindre trace d'oxygène résiduel à la cathode peut générer une différence de tension bien supérieure au niveau de tension attendu et donc fausser la mesure ; or il est bien connu qu'en pratique, il est très difficile de garantir la disparition totale d'un gaz surtout en présence d'un support absorbant comme l'élément de diffusion des gaz (désigné en général par GDL pour « gas diffusion layer ») contenu dans les membranes ;
- enfin cette méthode implique une mise en condition particulière du système et la disponibilité d'une source d'azote ou autre gaz neutre ; elle est donc difficilement automatisable, surtout dans le cadre d'applications embarquées;

On connaît également, de la demande de brevet EP 2 494 644, une procédure de mesure automatique de l'état de perméabilité des membranes d'une pile à combustible par observation de la dynamique d'équilibrage des pressions, de part et d'autre des membranes. Cependant, la mesure de perméabilité effectuée dans ce cadre est une mesure globale, présentant 2 inconvénients majeurs :
- La mesure n'est pas suffisamment sensible pour détecter une faible fuite sur une seule membrane dans un grand empilement, et
- La mesure ne permet pas d'identifier quelle membrane présente un défaut de perméabilité, ce qui s'avère relativement gênant pour la maintenance.

La présente invention vise ainsi à remédier aux inconvénients susmentionnés.

### BREVE DESCRIPTION DE L'INVENTION

Ainsi, la présente invention vise à proposer une procédure automatisée de détection de l'état de perméabilité d'une ou plusieurs membranes d'un empilement de pile à combustible, suffisamment sensible pour détecter toute fuite, et suffisamment précise pour permettre une maintenance correcte de la pile à combustible.

La présente invention concerne donc une procédure de détection de l'état de perméabilité d'au moins une membrane polymère échangeuse d'ions d'une pile à combustible, la pile à combustible étant formée par un empilement de cellules électrochimiques ayant chacune une anode et une cathode de part et d'autre d'une membrane polymère échangeuse d'ion, la pile à combustible ayant un système d'alimentation en gaz carburant côté anode des cellules électrochimiques et un système d'alimentation en gaz comburant côté cathode des cellules électrochimiques.

La procédure consiste à, lors de chaque arrêt de la pile à combustible :
- mesurer en permanence la tension résiduelle aux bornes d'au moins une cellule de l'empilement,
- mesurer le temps entre l'arrêt de la pile à combustible et le moment où la tension résiduelle mesurée devient inférieure à une valeur de tension prédéterminée,
- enregistrer le temps mesuré, et le comparer :
   ∘ au temps mesuré pour les arrêts précédentes, et
   ∘ au temps mesuré pour le même arrêt, pour d'autres cellules de la pile à combustible
- si la différence entre le temps mesuré et l'une de ces deux valeurs devient supérieure à un seuil prédéterminé, activer un signal d'alerte indiquant que la pile à combustible nécessite une inspection.

Dans une réalisation préférentielle, chaque arrêt de la pile à combustible est effectué selon les étapes suivantes :
(i) coupure de l'alimentation en gaz carburant et en gaz comburant,
(ii) maintien d'un prélèvement de courant tant qu'un révélateur approprié indique que le gaz comburant dans le système d'alimentation en gaz comburant n'est pas suffisamment consommé
(iii) injection de gaz enrichi en azote dans le système d'alimentation en gaz comburant.

L'utilisation d'une telle procédure d'arrêt permet de créer des conditions idéales pour une mesure de perméabilité fiable et non intrusive. En effet, cette procédure d'arrêt permet d'obtenir automatiquement la nature de gaz souhaité, à savoir de l'hydrogène pur à l'anode et de l'azote pur à la cathode, la pression de ces gaz étant en outre contrôlée. Ainsi, cette procédure d'arrêt garantit l'absence totale d'oxygène à la cathode, ce qui permet d'éviter toute polarisation parasite de la pile à combustible pendant la mesure de perméabilité. On précise ici que, dans l'ensemble de la demande, les termes « arrêt » et « extinction » sont synonymes pour ce qui concerne une pile à combustible.

Par ailleurs, la procédure d'arrêt ici décrite permet une bonne homogénéisation des gaz résiduels, ainsi qu'un contrôle permanent de la température et de l'humidité des gaz, ainsi que des composants de la pile à combustible. Le contrôle permanent de la température et de l'humidité permet de garantir des conditions constantes pour la mesure de perméabilité.

Ainsi, et pour résumer, une telle procédure d'arrêt permet de laisser la pile à combustible, à chaque arrêt, dans les conditions suivantes :
- Hydrogène à l'anode et azote à la cathode,
- Absence totale d'oxygène la cathode,
- Homogénéisation des gaz présents à l'anode et à la cathode, et
- Température, humidité et pressions constantes.

La répétabilité de ces conditions à chaque arrêt permet l'automatisation de la mesure de perméabilité selon l'invention. En outre, la présente invention permet d'effectuer une mesure de perméabilité sans alimentation en gaz extérieur, ni contrôle de débit associé. En effet, la mesure est effectuée en tirant profit du gaz résiduel emprisonné dans les circuits anodiques et cathodiques de la pile à combustible au terme de la procédure d'extinction.

Au terme de la procédure d'arrêt, dont un exemple de réalisation vient d'être décrit, une tension résiduelle persiste aux bornes des cellules de la pile à combustible. On rappelle ici qu'une cellule de la pile à combustible est formée d'une anode, d'une cathode et d'une membrane polymère échangeuse d'ions. La tension résiduelle a tendance à diminuer à mesure que les gaz présents respectivement à l'anode (hydrogène) et la cathode (azote) se mélangent par diffusion travers la membrane. Lorsqu'un mélange de gaz identique se forme de part et d'autre de la membrane, la tension résiduelle aux bornes de la cellule s'annule. Or, plus la membrane est perméable, plus le mélange tend à s'homogénéiser rapidement. Ainsi, il en découle que la dynamique avec laquelle la tension d'une cellule diminue est représentative de l'état de perméabilité se sa membrane. Ainsi, en mesurant cette dynamique, plus précisément en mesurant le temps entre l'arrêt de la pile à combustible et le moment où la tension résiduelle aux bornes s'annule, on obtient une information importante sur l'état de perméabilité de la membrane.

L'exploitation de cette information est effectuée de la façon décrite au paragraphe [0010] de la présente demande, et sera décrit en détail ultérieurement, à l'aide de figures.

Il est à noter que, ainsi que mentionné précédemment, il est utile que la pile se trouve dans des conditions optimales afin de procéder à une mesure de perméabilité fiable. Ces conditions optimales sont, par exemple, obtenues en procédant à un arrêt de la pile à combustible selon la procédure d'arrêt précédemment décrite. Toutefois, il est possible que cette procédure d'arrêt soit mise en oeuvre alors même que la pile à combustible n'avait pas atteint ses conditions nominales de fonctionnement. Dans ce cas, les conditions à l'issue de l'arrêt peuvent ne pas être correctes pour effectuer une mesure de perméabilité.

Afin de remédier à cet inconvénient, dans une réalisation préférentielle de l'invention, un calculateur de la pile à combustible active un signal pour que la mesure automatique de perméabilité ne soit pas activée, ou ne soit pas prise en compte, lorsque la pile à combustible ne se situe pas dans des conditions nominales de fonctionnement avant l'arrêt, ainsi que décrit au paragraphe précédent.

Par ailleurs, dans une réalisation avantageuse, les circuits d'alimentation en gaz anodique et cathodique de la pile à combustible sont fermés avant d'effectuer une mesure de tension résiduelle, ceci afin d'éviter tout échange de gaz avec le milieu ambiant ou avec les réservoirs de gaz reliés à la pile à combustible. En effet, de tels échanges risqueraient de fausser la mesure de perméabilité.

De manière générale, une procédure selon l'invention présente l'avantage, outre les aspects précédemment mentionnés, de ne nécessiter aucun équipement, installation ou procédure qui ne soit déjà nécessaire pour le fonctionnement normal de la pile. En outre, on constate que la mesure peut être faite de façon totalement automatique et de façon imperceptible pour l'utilisateur, sans aucun démontage ni préparation spéciale après chaque extinction de la pile. La présente invention est donc particulièrement avantageuse en termes de coûts, d'ergonomie d'utilisation et de temps d'installation.

La présente invention est également avantageuse en termes d'efficacité. En effet, on sait que, dans une application automobile, une pile à combustible subit au moins 15 000 cycles démarrage - arrêt. La présente invention, par l'automatisation de la mesure de perméabilité après chaque extinction de la pile, permet de suivre l'évolution de la perméabilité tout au long de la vie de la pile à combustible. Pour cela, dans une réalisation préférentielle, la procédure selon l'invention est mise en oeuvre dans une pile à combustible dont le calculateur reste alimenté pendant quelques minutes après l'extinction de la pile. Dans le cas d'une pile à combustible installé dans un véhicule, cette alimentation est rendue possible, par exemple grâce à une batterie de servitude du véhicule.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- la figure 1 est un schéma d'une pile à combustible selon l'invention dans laquelle est mise en oeuvre une procédure selon l'invention,
- la figure 2 montre un organigramme de procédure d'arrêt utilisé pour la mise en oeuvre d'une procédure selon l'invention,
- la figure 3 montre l'évolution de certains paramètres d'une pile à combustible après extinction,
- la figure 4 montre la tension résiduelle aux bornes des différentes cellules d'une pile à combustible,
- la figure 5 montre les valeurs de temps mesurés dans le cadre d'une procédure selon l'invention,
- la figure 6 montre l'évolution des valeurs de temps mesurés dans le cadre d'une procédure selon l'invention.

### DESCRIPTION DU MEILLEUR MODE DE REALISATION DE L'INVENTION

Pour des raisons de sécurité, les piles à combustible sont en général équipées d'une vanne de coupure d'hydrogène qui reste fermée lors des arrêts. Dans ce cas, il n'est pas possible de prélever l'hydrogène dans le réservoir pendant la procédure d'extinction. La procédure d'arrêt doit donc être réalisée avec uniquement l'hydrogène résiduel dans les canaux, les tubulures, les réservoirs internes de déshumidification et autres éléments de la ligne d'alimentation allant de la vanne de sécurité jusque la pile à combustible proprement dite, ces éléments étant désignés dans la suite en général comme le circuit d'alimentation de la pile à combustible.

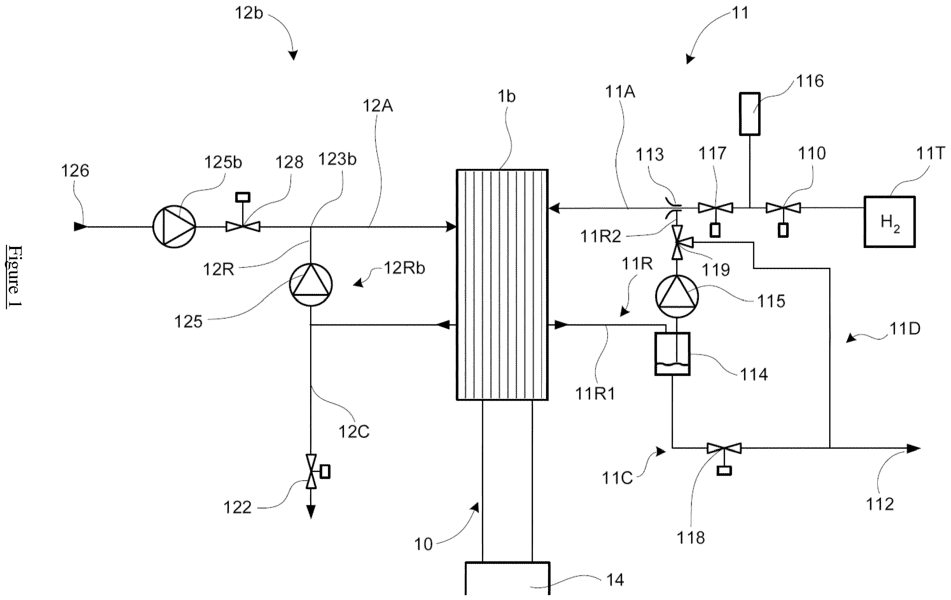

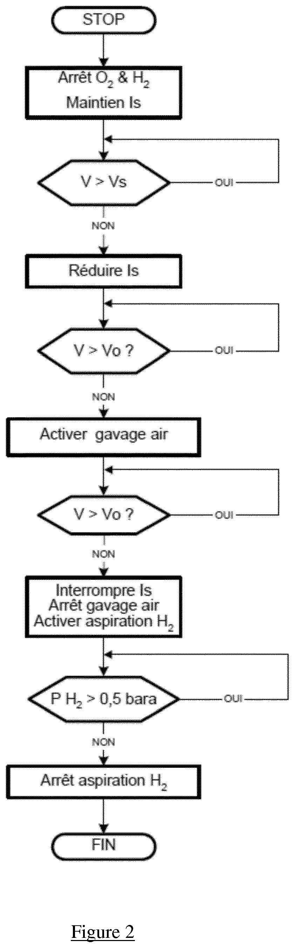

A la figure 1, on voit une pile à combustible 1b du type à électrolyte sous la forme d'une membrane polymère (c'est à dire de type PEFC pour Polymer Electrolyte Fuel Cell ou PEM pour Proton Exchange Membrane). La pile à combustible 1b est approvisionnée par deux gaz, à savoir le carburant (l'hydrogène stocké ou fabriqué à bord du véhicule) et le comburant (air ou l'oxygène pur) qui alimentent les électrodes des cellules électrochimiques. Une charge électrique 14 est branchée à la pile à combustible 1b par une ligne électrique 10. Pour simplifier, la figure 1 ne représente que les éléments des circuits de gaz utiles à la compréhension d'une procédure d'extinction telle que représentée en figure 2, ci-après décrite.

### Description du circuit anodique :

L'installation comporte un circuit d'alimentation 11 en gaz carburant coté anode. On voit un réservoir 11T d'hydrogène pur H₂ relié à l'entrée du circuit anodique de la pile à combustible 1b au moyen d'une canalisation d'alimentation qui passe par une vanne de coupure 110, puis par une vanne de régulation de pression 117, puis par un éjecteur 113, puis par un canal d'alimentation 11A en gaz carburant aboutissant aux anodes. Une sonde de pression (non représentée) est installée sur le canal d'alimentation 11A juste avant l'entrée dans la pile à combustible 1b. Fait partie du circuit d'alimentation 11 en hydrogène (le carburant) un circuit de recyclage 11R de l'hydrogène non consommé par la pile à combustible, branché à la sortie du circuit anodique de la pile à combustible 1b. Un séparateur d'eau 114 est installé sur le circuit de recyclage 11R. L'éjecteur 113 ainsi qu'une pompe de re-circulation 115 assurent le recyclage de l'hydrogène non consommé et le mélange à l'hydrogène frais en provenance du réservoir.

On voit aussi une chambre d'accumulation additionnelle de gaz carburant 116 disposée sur la tuyauterie du circuit d'alimentation 11 en gaz carburant, entre la vanne de coupure 110 et une vanne de régulation de pression 117. La chambre d'accumulation additionnelle est, dans ce mode préféré de réalisation, placée là où la pression est la plus élevée dans le circuit d'alimentation, de façon à en amoindrir le volume, ou à volume identique, de façon à stoker une plus grande quantité d'hydrogène. Notons que la chambre d'accumulation additionnelle de gaz carburant 116 pourrait être disposée à n'importe quel endroit du circuit d'alimentation en gaz carburant, c'est-à-dire à n'importe quel endroit entre la vanne de coupure 110 et la pile à combustible 1b, même sur le circuit de recyclage 11R, ou sur le circuit entre le séparateur d'eau 114 et l'éjecteur 113. Cependant il est intéressant de la placer à un endroit du circuit où la pression est plus élevée afin d'en réduire le volume. D'autre part, la position en amont de la vanne de régulation de pression rend possible une décharge contrôlée de ladite chambre d'accumulation.

On voit également une pompe d'aspiration 119 et une vanne de coupure 118 installés sur une canalisation aboutissant à l'atmosphère et branchée sur la boucle de recyclage 11R du gaz carburant, de préférence sous le séparateur d'eau 114. Le branchement à cet endroit précis, montré à la figure 1, permet en commandant la vanne de coupure 118 d'assurer la triple fonction d'évacuation de l'eau, de purge, et d'aspiration de l'hydrogène. Cependant, ce détail de réalisation n'est pas limitatif. Pour assurer la fonction d'aspiration de l'hydrogène, la canalisation comportant la vanne de coupure 118 pourrait être branchée à n'importe quel endroit en aval de la vanne de régulation de pression 117.

### Description du circuit cathodique :

L'installation comporte également un circuit d'alimentation 12b en gaz comburant coté cathodes. Ce circuit comporte un compresseur d'air 125b servant en usage normal à alimenter la pile à combustible en air atmosphérique 126 au moyen d'une canalisation d'alimentation qui passe par une vanne de coupure 128, puis par un canal d'alimentation 12A en gaz comburant aboutissant aux cathodes. Fait partie du circuit d'alimentation 12 en air, contenant l'oxygène, un circuit de recyclage 12R de l'oxygène non consommé par la pile à combustible, branché à la sortie du circuit cathodique de la pile à combustible 1b. Le circuit de recyclage 12Rb est directement branché au canal d'alimentation 12A par un branchement 123b en dérivation en aval du compresseur d'air 125b. Une vanne régulatrice de pression 122 permet, en fonctionnement normal, de faire échapper en continu l'air appauvri vers l'atmosphère. Le degré d'ouverture de cette vanne régulatrice de pression 122 est contrôlé pour maintenir la pression à la valeur souhaitée dans le circuit cathodique.

En fonctionnement normal de la pile à combustible, le circuit de recyclage n'est pas utilisé, la pompe 125 est à l'arrêt, et aucun gaz ne circule dans le circuit de recyclage 12Rb qui devient virtuellement inexistant. La totalité du gaz non consommé par le circuit cathodique est dirigé vers l'atmosphère à travers la vanne régulatrice de pression 122b. Dans le cas où la pompe 125 n'assure pas naturellement la fonction d'anti-retour lorsqu'elle est arrêtée, il faut prévoir un clapet anti-retour sur le circuit de recyclage 12Rb de façon à garantir le passage de la totalité de l'air fourni par le compresseur vers le circuit cathodique de la pile à combustible 1b.

La vanne de coupure 128 permet d'isoler le circuit cathodique de l'air atmosphérique lorsque la pile est à l'arrêt. Cette vanne de coupure 128 peut indifféremment être placée en amont ou en aval du compresseur.

Un exemple de procédure d'arrêt de la pile à combustible, permettant d'arrêter la pile avant mise en oeuvre d'une procédure selon l'invention, est décrite ci-après. Elle permet d'éteindre la pile à combustible de façon à garantir un stockage avec un mélange d'hydrogène et d'azote à l'intérieur, et cela, sans nécessiter de réservoir d'azote.

Cette procédure d'arrêt est composée essentiellement de 3 phases :
- 1ère phase : phase de consommation de l'oxygène résiduel, qui se produit à partir de la coupure de l'alimentation en gaz carburant et en gaz comburant, et par un prélèvement de courant IS aux bornes de la pile à combustible ; on maintient ce prélèvement de courant IS tant qu'un révélateur approprié indique que le gaz comburant dans le système d'alimentation en gaz comburant n'est pas suffisamment consommé ; un révélateur approprié est par exemple la tension présente aux bornes de la pile à combustible ;
- 2ème phase : phase de neutralisation, qui se produit en remplissant le circuit cathodique d'azote ; dans le mode de réalisation décrit ici, l'azote est celui de l'air atmosphérique ; on procède donc à une injection forcée d'air atmosphérique, ce qui apporte à nouveau un peu d'oxygène dont il faut contrôler la consommation par prélèvement de courant;
- 3ème phase, optionnelle, pendant laquelle, après l'arrêt total de la production d'électricité, on retire de façon forcée un éventuel excès de gaz carburant (ici, aspiration forcée de l'hydrogène excédentaire) ; soulignons que cette aspiration ne se fait qu'après avoir amené la pile à combustible dans un état où l'on a pris les précautions permettant d'éviter la sous-alimentation en hydrogène dont on connaît les graves inconvénients.

La figure 2 schématise les commandes essentielles d'une telle procédure d'arrêt. On voit que, à partir d'un ordre d'arrêt de la pile à combustible (instruction STOP), un automate de commande de la pile à combustible procède au départ du processus d'arrêt en coupant l'alimentation des gaz, c'est-à-dire en fermant, par exemple simultanément, les vannes de coupure 110 et 128

Le courant IS est d'abord établi à 50A. A partir du moment où la tension V de la pile à combustible est inférieure à une valeur de seuil VS choisie expérimentalement (environ après 25 secondes), l'automate procède à la réduction progressive du courant IS en même temps la pile à combustible commencent à descendre en tension.

Tant que la tension de la pile à combustible est à nouveau supérieure à V₀ (V₀ valant approximativement 2Volts), l'automate maintient le prélèvement d'un courant IS et, grâce aux signaux délivrés par la sonde de pression (non représentée) et grâce à des circuits appropriés, l'automate contrôle le fonctionnement de la pompe de gavage (non représentée) en air pour maintenir une pression sensiblement constante dans le circuit d'alimentation en gaz comburant.

Dès que la tension de la pile à combustible n'est plus supérieure à 2V, l'automate envoie un ordre « arrêt gavage air », « Interrompre IS » et « Activer aspiration H2 » tandis que la pression est suivie grâce aux signaux délivrés par la sonde de pression et, à partir du moment où la pression du circuit anodique de la pile à combustible n'est plus supérieure à 0.9 bara, l'automate envoie un ordre « arrêt aspiration H2 ».

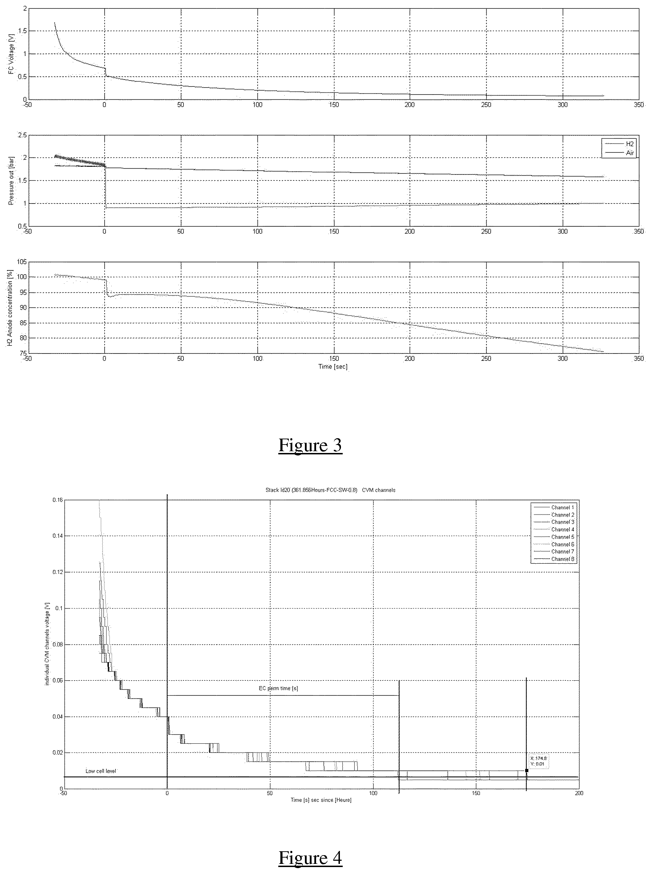

Sur la figure 3 apparaît l'évolution de plusieurs paramètres de la pile à combustible (16 cellules) lors d'une extinction selon la procédure décrite au-dessus. La première courbe représente l'évolution de la tension résiduelle aux bornes de la pile, la deuxième courbe représente l'évolution de la pression d'hydrogène et d'azote au sein de la pile (respectivement à la cathode et à l'anode), et la troisième courbe montre l'évolution de la concentration en hydrogène du gaz présente à l'anode.

L'instant 0 sur l'axe horizontal des courbes correspond à l'instant où la procédure d'extinction se termine, c'est-à-dire au moment FIN tel que montré en figure 2. A cet instant, comme montré sur la 2^{ème} courbe, la pression d'hydrogène à l'anode est de 0.9 bara et la pression d'azote à la cathode est de 1.8 bara. Après extinction, les gaz présents de part et d'autre de la membrane tendent à se mélanger en raison de la perméabilité de cette dernière. Par conséquent, et ainsi que montré sur la troisième courbe, la concentration en hydrogène à l'anode tend à baisser, en raison de la diffusion vers la cathode.

Après un temps dont la durée dépend de la perméabilité des membranes, un mélange hydrogène / azote finit par se former de manière homogène à l'anode et à la cathode, tendant à annuler ainsi toute tension résiduelle aux bornes de la pile, ainsi que montré sur la première courbe.

Partant de ce constat, une procédure de détection selon l'invention mesure donc en permanence la tension résiduelle individuelle aux bornes de chacune des cellules de la pile à combustible dans laquelle la présente invention est mise en oeuvre. Ainsi, la figure 4 illustre les tensions individuelles mesurées sur les 16 cellules d'une pile à combustible. Dans le cas illustré ici, les tensions sont mesurées par groupe de deux cellules, et la figure 4 montre donc 8 mesures correspondant aux huit groupes de deux cellules.

On précise ici que, ainsi que précédemment mentionné, la présente invention peut être mise en oeuvre soit en mesurant les tensions aux bornes d'une cellule, soit en mesurant les tensions aux bornes de deux cellules adjacentes.

Les mesures montrées sur la figure 4 sont effectuées avec une résolution de 5 mV. A l'instant 0, correspondant au terme de la procédure d'extinction, les mesures de tension se situent aux alentours de 40 mV. Les gaz présents de part et d'autre de chacune des membranes tendent à se mélanger en fonction des perméabilités respectives de chacune des membranes. On mesure alors le temps nécessaire pour que les tensions de cellules deviennent inférieures à un seuil prédéterminé représenté par une ligne horizontale « low cell level » sur la figure 4. Dans l'exemple montré sur cette figure, ce seuil est placé à 7.5mV. Le temps nécessaire pour l'atteindre est appelé EC_perm_time.

On rappelle ici que la dynamique avec laquelle les tensions résiduelles atteignent cette valeur révèle l'état de perméabilité des membranes. En effet, plus la membrane est perméable, plus les gaz se mélangent rapidement, et plus les tensions tendent rapidement vers une valeur nulle. On voit ainsi, sur la figure 4, que la 5^{ème} mesure atteint le seuil prédéterminé après un temps EC_perm_time égal à 112 secondes.

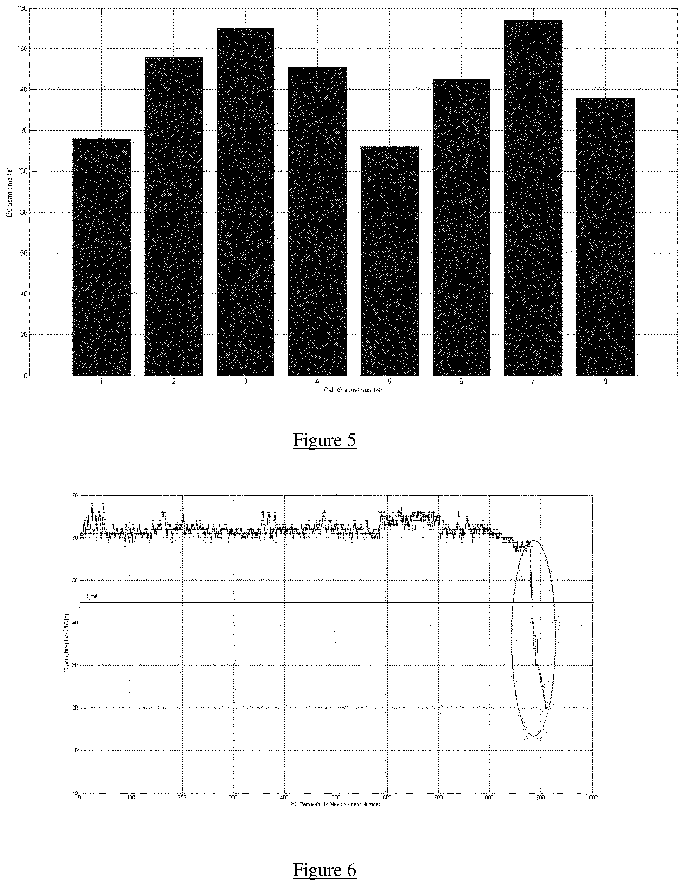

La figure 5 illustre, sur l'axe vertical, le temps pour chacune des mesures montrées sur l'axe horizontal. On constate que le temps EC_perm_time se situe entre 112 et 174 secondes pour les huit groupes de cellules

Le temps EC_perm_time de chaque cellule est alors enregistré, et deux types de contrôle sont effectués :
- Un contrôle instantané comparatif, au cours duquel chacune des valeurs EC_perm_time est comparée à la moyenne des EC_perm_time / 2, et
- Un contrôle de tendance individuelle au cours duquel, pour chaque cellule ou groupe de cellule, le temps est comparé aux valeurs mémorisées lors des extinctions précédentes.

Une alarme de défaut de perméabilité est alors donnée, soit lorsque la valeur EC_perm_time devient inférieure à la moyenne des EC_perm_time / 2, soit lorsque une nouvelle valeur enregistrée est inférieure d'au moins 25% à la moyenne des valeurs précédemment mémorisées pour la même cellule ou le même groupe de cellule.

La figure 6 illustre ainsi l'évolution d'une valeur de EC_perm_time pour une cellule donnée au cours de plusieurs mois d'utilisation d'une pile à combustible. L'axe horizontal représente le numéro de la mesure. Chaque mesure étant réalisée après une extinction de la pile, le nombre de mesures représente également le nombre de cycles démarrage/arrêts vécus par la pile.

L'axe vertical représente la valeur du EC_perm_time mesuré pour une cellule de la pile à combustible. La courbe illustre plus de 900 mesures consécutives pour cette même cellule. Les 875 premières mesures sont situées dans une plage très resserrée de 57 à 68 secondes. Cette précision est liée, notamment à la constance des conditions générées par la procédure d'extinction employée.

A partir de la mesure 875, on constate que la valeur du EC_perm_time amorce une descente très brutale. Cette rupture révèle un défaut de perméabilité sur cette cellule. En pratique, l'alarme est déclenchée lorsque la valeur du EC_perm_time descend de 25% par rapport à la valeur moyenne mesurée depuis le début de vie de la cellule, soit environ 45 secondes dans l'exemple de la figure 6. Cette valeur de 45 secondes est représentée par la ligne horizontale « limit ».

Ainsi, une procédure selon l'invention permet de détecter précisément un défaut de perméabilité sur la membrane de la cellule illustrée en figure 6. Bien entendu, de telles courbes pourraient être présentées pour l'ensemble des cellules de la pile à combustible. Seul un exemple est ici représenté. La procédure de détection permet donc une maintenance aisée de la pile à combustible puisqu'il suffit alors de remplacer la membrane défaillante avant de relancer la pile à combustible.

On note, à l'aide de cet exemple précis, le caractère systématique de cette procédure, puisque les mesures sont automatiquement enregistrées à chaque cycle, permettant ainsi une détection de défaut dans les meilleures conditions.

## Revendications

1. Procédure de détection de l'état de perméabilité d'au moins une membrane polymère échangeuse d'ions d'une pile à combustible, la pile à combustible étant formée par un empilement de cellules électrochimiques ayant chacune une anode et une cathode de part et d'autre d'une membrane polymère échangeuse d'ion, la pile à combustible ayant un système d'alimentation en gaz carburant côté anode des cellules électrochimiques et un système d'alimentation en gaz comburant côté cathode des cellules électrochimiques, la procédure consistant à, lors de chaque arrêt de la pile à combustible :
• fermer le circuit anodique et le circuit cathodique de la pile à combustible,
• mesurer en permanence la tension résiduelle aux bornes d'au moins une cellule de l'empilement,
• mesurer le temps entre l'arrêt de la pile à combustible et le moment où la tension résiduelle mesurée devient inférieure à une valeur de tension prédéterminée,
• enregistrer le temps mesuré, et le comparer à la fois :
∘ au temps mesuré pour les arrêts précédents, et
∘ au temps mesuré pour le même arrêt, pour d'autres cellules de la pile à combustible
• si la différence entre le temps mesuré et l'une de ces deux valeurs devient supérieure à un seuil prédéterminé, activer un signal d'alerte indiquant que la pile à combustible nécessite une inspection.

2. Procédure selon la revendication précédente, dans lequel un arrêt de la pile à combustible est effectué de la façon suivante :
(i) coupure de l'alimentation en gaz carburant et en gaz comburant, et
(ii) maintien d'un prélèvement de courant tant qu'un révélateur approprié indique que le gaz comburant dans le système d'alimentation en gaz comburant n'est pas suffisamment consommé ;
(iii) injection de gaz enrichi en azote dans le système d'alimentation en gaz comburant.

3. Procédure selon l'une des revendications précédentes, dans lequel on mesure la tension résiduelle aux bornes d'une cellule unique, et dans ce cas le défaut détecté concerne la membrane de la dite cellule.

4. Procédure selon l'une des revendications précédentes, dans lequel on mesure la tension résiduelle aux bornes de deux cellules, et dans ce cas le défaut détecté concerne l'une des deux membranes desdites cellules.

5. Procédure selon l'une des revendications précédentes, comprenant l'étape de maintenir l'alimentation d'un calculateur de la pile à combustible pendant un temps prédéterminé après chaque extinction.

## Patentansprüche

1. Verfahren zur Erfassung des Zustandes der Permeabilität mindestens einer Ionenaustauschpolymermembran einer Brennstoffzelle, wobei die Brennstoffzelle von einer Stapelung elektrochemischer Zellen geformt wird, die je eine Anode und eine Kathode zu beiden Seiten einer Ionenaustauschpolymermembran haben, wobei die Brennstoffzelle ein System zur Versorgung mit Treibgas auf der Anodenseite der elektrochemischen Zellen und ein System zur Versorgung mit brandförderndem Gas auf der Kathodenseite der elektrochemischen Zellen hat, wobei das Verfahren darin besteht, bei jeder Abschaltung der Brennstoffzelle:
• den Anodenkreislauf und den Kathodenkreislauf der Brennstoffzelle zu schließen,
• dauerhaft die Restspannung an den Anschlüssen mindestens einer Brennstoffzelle der Stapelung zu messen,
• die Zeit zwischen der Abschaltung der Brennstoffzelle und dem Moment, in dem die Restspannung unter einen vorbestimmten Spannungswert sinkt, zu messen,
• die gemessene Zeit zu speichern und sie dabei zu vergleichen mit:
∘ der Zeit, die für die vorherigen Abschaltungen gemessen wurde, und
∘ der Zeit, die für dieselbe Abschaltung für andere Zellen der Brennstoffzelle gemessen wurde
• wenn die Differenz zwischen der gemessenen Zeit und einem dieser beiden Werte über einen vorbestimmten Schwellenwert steigt, Aktivieren eines Alarmsignals, das anzeigt, dass die Brennstoffzelle eine Inspektion nötig hat.

2. Verfahren nach dem vorherigen Anspruch, bei dem eine Abschaltung der Brennstoffzelle folgendermaßen durchgeführt wird:
(i) Unterbrechung der Versorgung mit Treibgas und mit brandförderndem Gas, und
(ii) Aufrechterhaltung einer Stromabnahme, solange ein geeigneter Indikator anzeigt, dass das brandfördernde Gas im System zur Versorgung mit brandförderndem Gas nicht ausreichend verbraucht wird;
(iii) Injektion von stickstoffangereichertem Gas in das System zur Versorgung mit brandförderndem Gas.

3. Verfahren nach einem der vorhergehenden Ansprüche, bei dem man die Restspannung an den Anschlüssen einer einzelnen Zelle misst und in diesem Fall der erkannte Fehler die Membran der Zelle betrifft.

4. Verfahren nach einem der vorhergehenden Ansprüche, bei dem man die Restspannung an den Anschlüssen zweier Zellen misst und in diesem Fall der erkannte Fehler eine der beiden Membranen der Zellen betrifft.

5. Verfahren nach einem der vorhergehenden Ansprüche, umfassend den Schritt des Aufrechterhaltens der Versorgung eines Rechners der Brennstoffzelle während einer vorbestimmten Zeit nach jedem Ausfall.

## Claims

1. Procedure for detecting the permeability state of at least one polymeric ion-exchange membrane of a fuel cell stack, the fuel cell stack being formed by a stack of electrochemical cells each having an anode and a cathode on either side of a polymeric ion-exchange membrane, the fuel cell stack having a fuel gas supply system on the anode side of the electrochemical cells and an oxidant gas supply system on the cathode side of the electrochemical cells, the procedure consisting, upon each shutdown of the fuel cell stack, in:
• closing the anode circuit and the cathode circuit of the fuel cell stack,
• continuously measuring the residual voltage at the terminals of at least one cell of the stack,
• measuring the time between the shutdown of the fuel cell stack and the moment that the residual voltage measured drops below a predetermined voltage value,
• recording the time measured, and comparing it both:
∘ to the time measured for the previous shutdowns, and
∘ to the time measured for the same shutdown, for other cells of the fuel cell stack
• if the difference between the time measured and one of these two values becomes greater than a predetermined threshold, activating a warning signal that indicates that the fuel cell stack requires an inspection.

2. Procedure according to the preceding claim, in which a shutdown of the fuel cell stack is carried out in the following manner:
(i) the supply of fuel gas and oxidant gas is cut off, and
(ii) current continues to be drawn as long as an appropriate indicator indicates that the oxidant gas in the oxidant gas supply system has not been sufficiently consumed;
(iii) nitrogen-enriched gas is injected into the oxidant gas supply system.

3. Procedure according to one of the preceding claims, in which the residual voltage at the terminals of a single cell is measured, and in this case the defect detected relates to the membrane of said cell.

4. Procedure according to one of the preceding claims, in which the residual voltage at the terminals of two cells is measured, and in this case the defect detected relates to one of the two membranes of said cells.

5. Procedure according to one of the preceding claims, comprising the step of maintaining the power supply of a controller of the fuel cell stack for a predetermined time after each extinction.
